# EUROPÄISCHE PATENTSCHRIFT

(11) **EP 1 013 704 B1**
(45) Veröffentlichungstag und Bekanntmachung des Hinweises auf die Patenterteilung: **19.03.2003**
(21) Anmeldenummer: 99124444.3
(22) Anmeldetag: 08.12.1999
(51) Int. Cl.: C08J 9/00, C08L 75/04

(54) **Verwendung von Metallsalzen der Ricinolsäure bei der Herstellung von Polyurethanschäumen**
Use of ricinolic acid metal salts in the preparation of polyurethane foams
Utilisation de sels métalliques d'acide ricinolique dans la préparation de mousses de polyuréthane

(30) Priorität: 21.12.1998 DE 19859099
(43) Veröffentlichungstag der Anmeldung: 28.06.2000
(73) Patentinhaber: Goldschmidt AG, 45127 Essen (DE)
(72) Erfinder: Boinowitz, Tammo, Dr., 45131 Essen (DE); Burkhart, Georg, Dr., 45239 Essen (DE); Hoffmann, Ralf, Dr., 48308 Senden (DE); Müller, Felix, Dr., 42555 Velbert (DE); Schlöns, Hans-Heinrich, 45289 Essen (DE); Weier, Andreas, Dr., 45289 Essen (DE); Zellmer, Volker, Dr., 46240 Bottrop (DE); Ziegler, Rainer, 44627 Herne (DE)

(56) Entgegenhaltungen:
- DE-A- 4 014 055
- DE-A- 19 728 997
- FR-A- 1 500 200
- US-A- 3 978 011
- US-A- 4 296 211
- PATENT ABSTRACTS OF JAPAN vol. 014, no. 322 (C-0739), 10. Juli 1990 (1990-07-10) -& JP 02 115242 A (HITACHI CHEM CO LTD), 27. April 1990 (1990-04-27)

## Beschreibung

Die Erfindung betrifft die Verwendung von Metallsalzen der Ricinolsäure und deren Lösungen bei der Herstellung von Polyurethanschäumen (PUR-Schäume).

Polyurethanschaumstoffe finden aufgrund ihrer hervorragenden mechanischen und physikalischen Eigenschaften in den verschiedensten Bereichen Verwendung. Einen besonders wichtigen Markt für verschiedenste Typen von PUR-Schäumen, wie konventionelle Weichschäume auf Ether- und Esterpolyolbasis, Kaltschäume (häufig auch als HR-Schäume bezeichnet) und Hartschäume, sowie Schäume deren Eigenschaften zwischen diesen Klassifizierungen liegen, wie z. B. halbharte Systeme, stellt die Automobilindustrie dar. Es werden z. B. Hartschäume als Dachhimmel, Esterschäume zur Innenverkleidung der Türen sowie für ausgestanzte Sonnenblenden, Kalt- und Weichschäume für Sitzsysteme verwendet.

In den letzten Jahren haben sich die Anforderungen der Automobilhersteller an ihre Schaumstoffzulieferer, insbesondere bezüglich einer Emissionsspezifikation, deutlich verschärft. Wurde in der Vergangenheit der Schwerpunkt alleine auf das Foggingverhalten der Schäume gelegt (DIN 75 201, Bestimmung des Foggingverhaltens von Werkstoffen der Kfz-Innenausstattung), ist heute außerdem der Gehalt an flüchtigen organischen Bestandteilen (VOC = volatile organic compounds) Gegenstand analytischer Bestimmungen (Volkswagen Zentralnorm 55 031, Daimler Benz PB VWT 709). Die Daimler-Benz-Methode verlangt neben der quantitativen Bestimmung des VOC- und Fogwertes die Zuordnung der Emissionen zu einzelnen chemischen Verbindungen.

Ein konventioneller Weichschaum mit der Dichte 25 kg/m³ weist typischerweise folgende VOC-Emissionen auf: Gesamtwert 800 ppm, aufgeschlüsselt in 550 ppm BHT (Bis-2,6-tert.-butyl-4-hydroxytoluol), 200 ppm 2-Ethylhexansäure, 20 ppm tertiäre Amine, 10 ppm Siloxane, 20 ppm unbestimmte Verbindungen. Selbstverständlich sind die Emissionen stark von der jeweiligen Rezeptur abhängig, jedoch sind stets BHT und 2-Ethylhexansäure die Hauptkomponenten. Das BHT stammt typischerweise aus dem Polyol und Isocyanat. Die Hersteller dieser Rohstoffe bieten seit kurzem BHT-freie Qualitäten ihrer Produkte an. Unter Verwendung dieser Rohstoffe können Schäume mit einem VOC-Wert von etwa 250 ppm hergestellt werden. 2-Ethylhexansäure ist ein Zersetzungsprodukt des Zinnoctoats, welches als Katalysator der Polyurethanreaktion wirkt. Da es keine technisch verfügbare Alternative zum Zinnoctoat gibt, die dessen Anwendungsspektrum voll abdeckt, läßt sich der VOC-Wert nach dem Stand der Technik nicht deutlich reduzieren, auf keinen Fall auf einen Wert < 100 ppm.

Da Kfz-Hersteller inzwischen einen VOC-Richtwert von 100 ppm festgelegt haben, der in den nächsten Jahren erreicht werden muß, besteht dringende technische Notwendigkeit, die 2-Ethylhexansäure-Emission zu reduzieren.

Verwandt mit der Emissionsproblematik sind die Bestrebungen der Automobilindustrie, den Geruch von PUR-Schäumen zu senken. Das drückt sich unter anderem in der Installation von Eingangskontrollen der PUR-Schäume durch sogenannte "elektronische Nasen" (Firma Aroma Scan, UK) aus, die die sensorische Geruchspanelprüfung automatisieren.

Die für den Schaumgeruch verantwortlichen Substanzen konnten noch nicht eindeutig bestimmt werden. Mit Sicherheit handelt es sich um eine Vielzahl von Substanzklassen, die notwendige Bestandteile der Formulierung (z. B. tertiäre Amine), Verunreinigungen der Rohstoffe (z. B. Aldehyde im Polyetherol) oder Produkte von Nebenreaktionen während der Schaumherstellung sein können.

Zur Zeit gibt es keine technische Lösung für diese Anforderung. Die Automobilindustrie sowie in besonderem Maße der Flugzeugbau benötigen speziell flammgeschützt ausgestattete Schaumqualitäten. Zu diesem Zweck werden PUR-Schäumen Flammschutzmittel zugesetzt. Chemisch handelt es sich dabei in den meisten Fällen um halogenierte Phosphorsäureester. 1986 wurden allein in den USA PUR-Schäume mit 13 000 t Flammschutzmittel versetzt (J. Troitzsch, International plastics flammability handbook, 1990). Bekannt ist, daß gerade diese Flammschutzmittel in erheblichem Maß zu den Schaumemissionen beitragen. Schäume, die mit dem weit verbreiteten Flammschutzmittel TDCPP (Tris(1,3-dichloroisopropyl)phosphat) hergestellt wurden, emittieren eine Fülle von leichtflüchtigen Verbindungen, von denen chlorierte Propylalkohole die Majorität darstellen. Insofern besteht die Anforderung, die Flammschutzspezifikationen, ohne oder mit reduziertem Flammschutzmitteleinsatz, zu erfüllen.

Überraschenderweise wurde nun eine Gruppe von Verbindungen gefunden, deren Verwendung im Polyurethanschaum eine Lösung für die oben genannten technischen Problemstellungen darstellt.

Es handelt sich dabei um die Verwendung von Metallsalzen der Ricinolsäure oder deren Lösungen in Wasser oder organischen Lösungsmitteln bei der Herstellung von Polyurethanschäumen. Der Begriff 'Herstellung' ist so zu verstehen, daß sowohl die Zugabe vor der eigentlichen Verschäumung als auch die Nachbehandlung des fertigen Schaumes, zum Beispiel durch eine Sprühapplikation oder Tränken mit einer Lösung des Metallsalzes, eingeschlossen ist. Mit Polyurethanschäumen sind sowohl flexible Schäume auf Basis von Ether- und Esterpolyolen als auch Hartschäume gemeint, sowie Schäume, deren Eigenschaften zwischen diesen Klassifizierungen liegen, wie z.B. halbharte Systeme.

Durch den Zusatz der Metallsalze der Ricinolsäure lassen sich Schaumstoffe mit geringeren Emissionswerten, besseren Flammschutzeigenschaften und einem geringeren Geruch herstellen. Zudem wird die Aushärtung der Schaumoberfläche beschleunigt. Diese Vorteile lassen sich erzielen, ohne daß sich die sonstigen physikalischen Eigenschaften, wie z. B. Dichte, Härte, Rückprallelastizität oder Stauchhärte, ändern.

In besonderer Weise sind Ricinoleate der Metalle aus der 1., 2. oder 4. Hauptgruppe sowie der 1., 2. oder 8. Nebengruppe des Periodensystems geeignet.

Dabei kann das Metallsalz der Ricinolsäure in der sogenannten Aktivatorlösung, bestehend aus Wasser, tertiärem Amin, Siliconstabilisator und gegebenenfalls Emulgator, vorgelöst werden. Die direkte Dosierung des festen Ricinoleats in die Verschäumungskomponenten führt zu einem Schaum mit unregelmäßiger Zellstruktur. Da viele Verschäumer nur über eine direkte Dosierung verfügen, stellt ein Produkt, in welchem das Metallsalz der Ricinolsäure in gelöster Form vorliegt, eine erhebliche Verbesserung dar. Dabei sind wasserfreie Lösungen vorzuziehen, weil ansonsten das Wasser aus dem Lösungsmittel mit den Isocyanaten reagiert und deshalb in die Formulierung einberechnet werden muß. Außerdem sind einige Übergangsmetallsalze nur bedingt hydrolysestabil.

Als wasserfreie Lösungsmittel des Metallsalzes der Ricinolsäure sind grundsätzlich die Kombinationen von 5 - 50 Gew.-%, bezogen auf die Masse von Lösungsmittel und Salz, eines ethoxylierten Fettalkohols mit gerader und verzweigter Alkylkette und einer Kohlenstoffzahl zwischen 10 und 18 mit weniger als 30 Ethylenoxideinheiten mit 5 - 30 Gew.-% eines tertiären Amins geeignet. In derartig charakterisierten Lösungmitteln können bis zu 60 Gew.-% des Metallsalzes der Ricinolsäure klar gelöst werden.

Bevorzugt ist eine Kombination von 5 - 35 Gew.-% eines Fettalkohols mit gerader und verzweigter Alkylkette und einer Kohlenstoffzahl zwischen 10 und 18 mit weniger als 20 Ethylenoxideinheiten mit 5 - 30 Gew.-% eines tertiären Aminoalkohols.

Besonders bevorzugt ist die Verwendung von N,N,N',N'Tetrakis(2-hydroxy-propyl)ethylendiamin als Aminoalkohol.

Von den bevorzugten Kationen ist Zink, insbesondere in zweiwertiger Form, besonders bevorzugt.

Eine derartige Lösung ist beispielsweise in DE-A-40 14 055 als Mittel mit desodorierender Wirkung beschrieben. Als Anwendungen werden Kosmetik, Waschen und Reinigen und Geruchsabsorption in technischen Anwendungen beschrieben. Die erfindungsgemäße Verwendung im PUR-Schaum unterscheidet sich von diesen Anwendungen in drei grundlegenden Punkten.

Erstens wird das Metallsatz der Ricinolsäure bei der Herstellung der PUR-Schäume sehr reaktiven Reaktionspartnern, wie Isocyanaten, ausgesetzt. Dabei erwartet der Fachmann eine Reaktion mit der Hydroxylfunktion des Ricinoleats und damit das Einbinden in die Polymermatrix. Zweitens sind die Auswirkungen des Zinkricinoleats auf die sorgsam abgestimmte Katalyse des PUR-Schaums, und damit die Möglichkeit, einen physikalisch gleichen Schaum herzustellen, nicht vorherzusehen. Eine Beeinflussung der Katalyse durch den Aminoalkohol, welcher als Lösungsmittelkomponente dient, ist ebenfalls nicht vorherzusehen.

Und drittens entsteht die zu bindende Substanz 2-Ethylhexansäure erst während der Schaumherstellung aus dem Zinnoctoat. Das bedeutet, daß innerhalb der kurzen PUR-Reaktion, welche typischerweise etwa 100 Sek. dauert, alle Transportvorgänge, die die Begegnung der Reaktionspartner 2-Ethylhexansäure und Metallsalz der Ricinolsäure betreffen, abgeschlossen sein müssen, bevor die Polymermatrix erstarrt.

Technischer Stand ist die Verwendung von Zinnoctoat bei der Herstellung von PUR-Weichschäumen auf Basis von Polyetherolen (George Woods, The ICI Polyurethanes Book, Verlag Wiley, S 45 und Ron Herrington, Flexible Polyurethane Foams, Dow Chemical, S. 2.30). Das Zinnoctoat dient als Katalysator der Reaktion von Isocyanaten mit Polyolen (auch als Gelkatalysator bezeichnet) über einen komplexen Übergangszustand. Während der Herstellung des Schaumes hydrolysiert das Zinnoctoat und setzt die 2-Ethylhexansäure frei. Diese Zersetzung ist erwünscht, weil auf diese Weise die Rückreaktion der Urethanbindung zu den Edukten unterbunden ist. Für die Ausbildung des erwünschten Ligandenkomplexes ist die Ethylverzweigung des Octoates von entscheidender Bedeutung.

Die erfindungsgemäßen Substanzen weisen keine Alkylverzweigung auf und sind aufgrund ihres geringen Metallgehaltes nicht mit Zinnoctoat zu vergleichen.

Einen breiten Umfang in der Patentliteratur nimmt die Verwendung von Zinkstearat als internes Trennmittel zur Herstellung von RIM-Schäumen (reaction injection moulding = Reaktionsspritzguß) ein. Beispielhaft seien die Patentschriften US-A-5 008 033, US-A-5 212 209, EP-A 0 490 342, WO 96/22182 genannt. In diesen Schriften wird die Verwendung von Metallsalzen höherer Carbonsäuren, vorzugsweise Zinkstearat, und deren Zusätze zur Kompatibilisierung im RIM-Gemisch beansprucht.

An dieser Stelle sei darauf hingewiesen, daß Polyurethan-RIM-Systeme deutliche Unterschiede gegenüber den erfindungsgemäßen Schaumsystemen aufweisen. Bei RIM-Systemen handelt es sich um kompakte Formkörper oder mikrozellulare Systeme, keinesfalls jedoch um offenporige Schäume. Dementsprechend unterscheiden sich die Dichten beider Systeme drastisch. RIM-Formkörper weisen Dichten von > 700 kg/m³, die erfindungsgemäßen PUR-Schäume haben Dichten von < 500 kg/m³. Die Katalyse von RIM-Systemen ist deutlich anders. Anstelle von Zinnoctoat wird typischerweise Dibutylzinnlaurat in RIM-Systemen eingesetzt. Wie die Vergleichsbeispiele zeigen, bieten weder Zinkstearat (Zinksalz der Octadecansäure), noch Zinkoleat (Zinksalz der 9-Octadecensäure), noch Zink-12-hydroxylstearat einen erfindungsgemäßen Vorteil.

In den folgenden Beispielen wird zunächst die Herstellung der Polyurethanschäume unter Verwendung der erfindungsgemäßen Verbindungen beschrieben. Anschließend werden die Ergebnisse der anwendungstechnischen Untersuchungen dieser Prüfkörper dargestellt.

Als nicht erfindungsgemäße Verbindungen werden mit Zinkoleat (Zinksalz der 9-Octadecensäure), Zinkstearat (Zinksalz der Octadecansäure) und Zink-12-hydroxylstearat, dem Zinkricinoleat (Zinksalz der 12-Hydroxyl-9-octadecensäure) möglichst strukturverwandte Moleküle zum Vergleich ausgewählt.

### Beispiele

### Herstellung der Polyurethanschäume

Zur Herstellung der Polyurethanschäume wird folgende Rezeptur verwendet: 100 Gew.-Teile Polyetherol (Hydroxylzahl = = 47 mg KOH/g, 11 % EO), 4,0 Gew.-Teile Wasser, 0,80 Gew.-Teile TEGOSTAB® BF 2370 (Marke der Th. Goldschmidt AG) (Siliconstabilisator), 0,15 Gew.-Teile eines tertiären Amins, 0,20 Gew.-Teile KOSMOS® 29 (Marke der Th. Goldschmidt AG) (Zinnoctoat), 48,3 Gew.-Teile Toluoldiisocyanat T 80 (Index 105), gegebenenfalls eine variable Menge des erfindungsgemäßen Metallsalzes der Ricinolsäure, gegebenenfalls 1,0 Gew.-Teile eines nicht erfindungsgemäßen Metallsalzes einer Carbonsäure sowie gegebenenfalls 6,0 oder 8,0 Gew.-Teile des Flammschutzmittels TDCPP (= Tris(1,3-dichloroisopropyl)phosphat). Bei einem Teil der Beispiele wird die verwendete Menge an Zinnoctoat ebenfalls variiert.

Bei der Verschäumung werden 300 g Polyol eingesetzt, die anderen Formulierungsbestandteile werden entsprechend umgerechnet. Dabei bedeutet z. B. 1,0 Teile einer Komponente 1 g dieser Substanz je 100 g Polyol.

Zur Verschäumung werden das Polyol, Wasser, Amin, Zinnoctoat, Siliconstabilisator und gegebenenfalls das erfindungsgemäße Additiv unter Rühren gut vermischt. Nach Zugabe des Isocyanats wird mit einem Rührer 7 Sek. bei 3000 U/Min. gerührt und das Gemisch in einen mit Papier ausgekleideten Holzkasten (Grundfläche 27 cm x 27 cm) gegossen. Es entsteht ein Schaumstoff, der den nachfolgend beschriebenen anwendungstechnischen Tests unterzogen wird.

Tabelle 1 faßt die variablen Bestandteile der Rezepturen der Beispielschäume zusammen.

**Tabelle 1**

| Beispiel Nr. | erfindungsgemäß | Salz der Ricinolsäure [Teile/Metallkation] | Zinnoctoat [Teile] | Flammschutzmittel [Teile] |
|---|---|---|---|---|
| 1 | nein | 0 | 0,20 | 0 |
| 2 | ja | 0,1/Zink | 0,20 | 0 |
| 3 | ja | 0,5/Zink | 0,20 | 0 |
| 4 | ja | 1,0/Zink | 0,20 | 0 |
| 5 | nein | 1,0 Zinkstearat | 0,20 | 0 |
| 6 | nein | 1,0 Zinkoleat | 0,20 | 0 |
| 7 | nein | 1,0 Zink-12-hydroxylstearat | 0,20 | 0 |
| 8 | ja | 1,0/Zink | 0,18 | 0 |
| 9 | ja | 1,0/Zink | 0,16 | 0 |
| 10 | ja | 1,0/Zink | 0,14 | 0 |
| 11 | nein | 0 | 0,2 | 6,0 |
| 12 | nein | 0 | 0,2 | 8,0 |
| 13 | ja | 1,0/Zink | 0,16 | 6,0 |
| 14 | ja | 1,0/Zink | 0,16 | 8,0 |
| 15 | ja | 1,0/Na | 0,16 | 8,0 |
| 16 | ja | 1,0/Ca | 0,16 | 8,0 |
| 17 | ja | 1,0/Sn | 0,16 | 8,0 |
| 18 | ja | 1,0/Sn | 0,1 | 8,0 |
| 19 | ja | 1,0/Sn | 0,0 | 8,0 |
| 20 | nein | 1,0 Zinkstearat | 0,16 | 8,0 |
| 21 | nein | 1,0 Zinkoleat | 0,16 | 8,0 |
| 22 | nein | 1,0 Zink-12-hydroxylstearat | 0,16 | 8,0 |

### Anwendungstechnische Tests

### Physikalische Eigenschaften der Schäume

Die hergestellten Schäume werden anhand folgender physikalischer Eigenschaften beurteilt:
a) Rücksacken des Schaumstoffes nach dem Ende der Steigphase (= Rückfall)
b) Schaumhöhe
c) Raumgewicht (RG)
d) Die Luftdurchlässigkeit des Schaumes wird durch eine Staudruckmessung am Schaumstoff ermittelt. Der gemessene Staudruck wird in mm Wassersäule angegeben, wobei dann die niedrigeren Staudruckwerte den offeneren Schaum charakterisieren. Die Werte werden im Bereich von 0 bis 300 mm gemessen.
e) Stauchhärte CLD, 40 %
f) Druckverformungsrest bei Kompression um 90 % für 22 h bei 70 °C
g) Rückprallelastizität (Ball rebound test)

**Tabelle 2:**

| Nr. | Steigzeit [s] | Rückfall [cm] | Höhe [cm] | RG [kg/m³] | Porosität [mm] | CLD 40 % [kPa] | Druckverformung | Rückprall [cm] |
|---|---|---|---|---|---|---|---|---|
| 1 | 105 | 0,0 | 30,5 | 26,2 | 10 | 3,4 | 6% | 48 |
| 2 | 96 | -0,1 | 30,0 | 26,1 | 11 | 3,4 | 6% | 48 |
| 3 | 91 | -0,1 | 30,1 | 26,2 | 19 | 3,5 | 7% | 49 |
| 4 | 90 | -0,2 | 29,8 | 26,0 | 46 | 3,7 | 6% | 48 |
| 5 | 115 | -0,1 | 29,2 | 26,3 | 8 | 3,3 | 6% | 48 |
| 6 | 106 | -0,1 | 29,3 | 26,2 | 10 | 3,4 | 6% | 49 |
| 7 | 109 | 0,0 | 29,7 | 26,5 | 9 | 3,5 | 6% | 48 |
| 8 | 100 | +0,1 | 30,3 | 26,0 | 25 | 3,4 | 7% | 48 |
| 9 | 104 | 0,0 | 30,3 | 26,2 | 11 | 3,5 | 7% | 48 |
| 10 | 113 | -0,1 | 30,0 | 26,2 | 10 | 3,3 | 6% | 48 |
| 11 | 104 | 0,0 | 29,4 | 26,3 | 7 | 3,4 | 6% | 50 |
| 12 | 107 | -0,1 | 29,4 | 26,6 | 9 | 3,3 | 6% | 48 |
| 13 | 102 | 0,0 | 29,2 | 26,4 | 10 | 3,4 | 7% | 49 |
| 14 | 106 | 0,0 | 29,2 | 26,9 | 9 | 3,3 | 7% | 49 |
| 15 | 125 | -0,1 | 28,2 | 25,8 | 7 | 3,1 | 6% | 48 |
| 16 | 123 | 0,8 | 29,2 | 26,4 | 8 | 3,2 | 6% | 48 |
| 17 | 90 | -0,1 | 30,3 | 25,7 | 16 | 3,3 | 7% | 48 |
| 18 | 101 | -0,2 | 30,1 | 26,2 | 11 | 3,4 | 6% | 49 |
| 19 | 121 | -0,2 | 29,4 | 26,3 | 8 | 3,2 | 6% | 48 |
| 20 | 113 | -0,1 | 29,3 | 26,3 | 10 | 3,4 | 6% | 49 |
| 21 | 104 | -0,1 | 30,0 | 26,2 | 11 | 3,2 | 6% | 48 |
| 22 | 108 | 0,0 | 28,9 | 26,1 | 9 | 3,4 | 7% | 48 |

Wie aus den geringen Rückfällen zu erkennen ist, lassen sich bei Zugabe der erfindungsgemäßen Metallsalze der Ricinolsäure stabile Polyurethanschäume herstellen. Aus Beispiel 1 bis 4 läßt sich eine katalytische Wirkung des Zinkricinoleats auf die Polyurethanreaktion ableiten. Zudem verringert sich die Offenzelligkeit der Schaumstoffe von 11 auf 46 mm Staudruck Wassersäule.

Beide Effekte, kürzere Steigzeit und verminderte Porosität, können ohne Schwierigkeit kompensiert werden, indem in der Formulierung die Zinnoctoatmenge reduziert wird (vergleiche Beispiel 8 bis 10). Beispiel 8 weist mit 0,16 Teilen Zinnoctoat und 1,0 Teilen Zinkricinoleat die gleiche Porosität und Steigzeit wie Beispiel 1, ohne Zinkricinoleat mit 0,20 Teilen Zinnoctoat, auf. Die Reduktion des Zinnoctoatgehaltes ist aufgrund seines Beitrages zur Emission erwünscht. Auch die übrigen physikalischen Eigenschaften dieser Schäume sind gleich.

Auch in Flammschutzformulierungen lassen sich physikalisch gleiche Schäume herstellen (siehe Beispiele 11 bis 14).

Mit den Ricinoleaten der übrigen Metallkationen ergeben sich ebenfalls physikalisch gleiche Schäume (siehe Beispiele 15 bis 17). Beispiel 19 zeigt, daß auch unter Verwendung eines erfindungsgemäßen Ricinoleats einwandfreie Schäume ohne Verwendung von Zinnoctoat hergestellt werden können.

### Messung der 2-Ethylhexansäure-Emissionen

Die 2-Ethylhexansäure-Emission wird in Anlehnung an die Mercedes-Benz-Prüfvorschrift PB VWT 709 bestimmt.

Im folgenden wird die Durchführung der Thermodesorption mit anschließender Gaschromatograhie/Massenspektrometrie-Kopplung (GC/MS) beschrieben.

### a) Meßtechnik:

Die Thermodesorption wird mit einem Thermodesorber "TDS2" mit Probenwechsler der Fa. Gerstel, Mülheim, in Verbindung mit einem Hewlett Packard HP6890/HP5973 GC/MSD-System durchgeführt.

### b) Meßbedingungen:

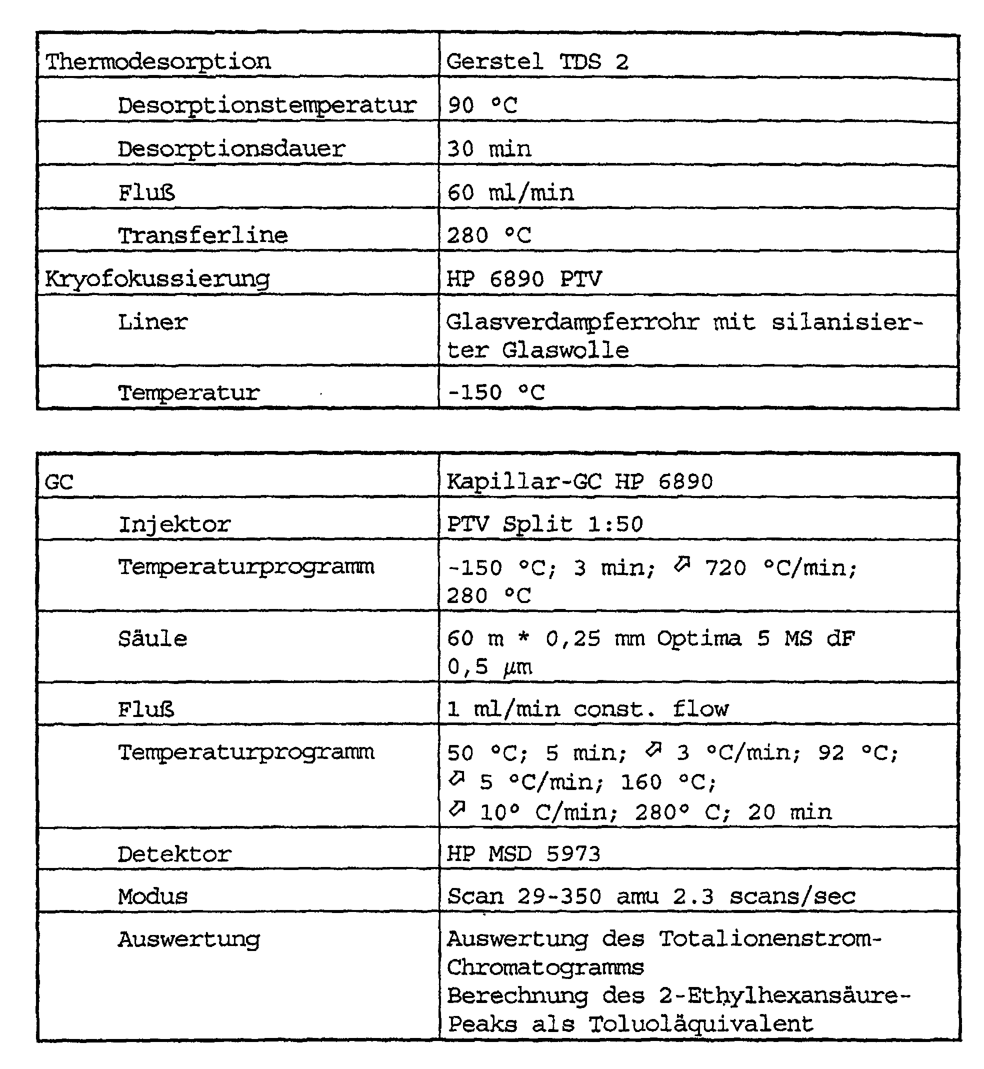

### c) Kalibration

Zur Kalibration wird 1 µl eines Gemisches aus Toluol und Hexadecan in Pentan (je 0,6 mg/ml) auf ein gereinigtes, mit Tenax TA (mesh 35/60) gefülltes Adsorptionsröhrchen gegeben und vermessen (Desorption 5 min; 280 °C)

### d) Probenvorbereitung

10 mg Schaumstoff werden in drei Teilproben in ein Thermodesorptionsröhrchen gesteckt. Dabei wird darauf geachtet, daß der Schaum nicht komprimiert wird.

### d) Auswertung

Zur Quantifizierung der 2-Ethylhexansäure-Emission wird der Peak, der mittels Massenspektrum als 2-Ethylhexansäure erkannt wird, über dessen Peakfläche mit dem Responsefaktor des Toluols aus der Kalibration als ppm-Toluoläquivalent bestimmt.

Tabelle 3 faßt die Ergebnisse der 2-Ethylhexansäure-Emissionen ausgewählter Bespiele zusammen.

**Tabelle 3:**

| Nr. | erfindungsgemäß | Zinkricinoleat [Teile] | Zinnoctoat [Teile] | 2-Ethylhexansäure [ppm] | 2-Ethylbexansäure [%] |
|---|---|---|---|---|---|
| 1 | nein | 0 | 0,20 | 218 | 100* |
| 2 | ja | 0,1 | 0,20 | 203 | 93 |
| 3 | ja | 0,5 | 0,20 | 126 | 58 |
| 4 | ja | 1,0 | 0,20 | 57 | 26 |
| 9 | ja | 1,0 | 0,16 | 46 | 21 |
| 5 | nein | 1,0 Zinkstearat | 0,20 | 224 | 103 |
| 6 | nein | 1,0 Zinkoleat | 0,20 | 213 | 98 |
| 7 | nein | 1,0 Zink-12-hydroxylstearat | 0,20 | 208 | 95 |

| | | | | | |
|---|---|---|---|---|---|
| * Der Ausgangswert 218 ppm wurde willkürlich gleich 100 % gesetzt | | | | | |

Aus den Ergebnissen geht eindeutig hervor, daß die 2-Ethylhexansäure-Emission durch Zusatz von Zinkricinoleat drastisch verringert wird. Dabei ist die Reduktion der Emission ungefähr proportional zur eingesetzten Menge des erfindungsgemäßen Additivs.

Beispielschaum 6 weist die gleiche Porosität und Steigzeit wie Beispiel 1 auf (siehe Tabelle 2). Das bedeutet, die Verminderung der 2-Ethylhexansäure-Emission läßt sich durch partiellen Ersatz des Zinnoctoates durch Zinkricinoleat nochmals steigern.

Die nicht erfindungsgemäßen Zinksalze der übrigen Carbonsäuren weisen keinerlei Wirksamkeit bezüglich der 2-Ethylhexansäure-Emission auf.

### Flammschutzeigenschaften

Der Abbrandgeschwindigkeit der Beispielschäume wird gemäß ASTM D 1692 bestimmt, wie in American National Standard K 65.114 beschrieben. Dazu werden Probekörper mit den Dimensionen 50 x 0,25 x 150 mm vorbereitet. Die Schäume werden, auf einem Drahtgitter liegend, an einer Seite mit einem Bunsenbrenner entflammt. Anschließend wird die Zeit bis zum selbsttätigen Erlöschen der Flamme sowie die zurückgelegte Brandstrecke bestimmt.

Tabelle 4 stellt die Brandzeiten und die Brandstrecken ausgewählter Beispiele dar.

**Tabelle 4:**

| Nr. | erfindungsgemäß | Ricinoleat [Teile/Kation] | Flammschutz [Teile] | ASTM D 1692 Zeit [s] | ASTM D 1692 Strecke [mm] |
|---|---|---|---|---|---|
| 11 | nein | 0 | 6,0 | 55 | 75 |
| 13 | ja | 1,0/Zink | 6,0 | 45 | 60 |
| 12 | nein | 0 | 8,0 | 48 | 60 |
| 14 | ja | 1,0/Zink | 8,0 | 42 | 53 |
| 15 | ja | 1,0/Na | 8,0 | 45 | 55 |
| 16 | ja | 1,0/Ca | 8,0 | 44 | 56 |
| 17 | ja | 1,0/Sn | 8,0 | 43 | 54 |
| 20 | nein | 1,0 Zinkstearat | 8,0 | 49 | 62 |
| 21 | nein | 1,0 Zinkoleat | 8,0 | 47 | 61 |
| 22 | nein | 1,0 Zink-12-hydroxylstearat | 8,0 | 48 | 60 |

Vergleicht man die Beispiele 11 und 13 bzw. 12 und 14 miteinander, erkennt man eine deutliche Verkürzung der Brandzeit und -strecke der mit Zinkricinoleat hergestellten Schäume. Beispiel 12 und 13 verdeutlicht, daß eine Zugabe von 1,0 Teilen Zinkricinoleat etwa der Wirkung von 2,0 Teilen Flammschutzmittel (TDCPP) entspricht. Zu beachten ist, daß alle Schäume eine vergleichbare Porosität aufweisen, denn bekanntermaßen verbrennen offenzellige Schäume, aufgrund der besseren Sauerstoffzufuhr, leichter.

Auch die Schäume, die unter Verwendung des Natrium-, Calcium- und Zinnricinoleates hergestellt werden, brennen deutlich schlechter als Vergleichsbeispiel 12.

Die nicht erfindungsgemäßen Zinksalze der übrigen Carbonsäuren weisen keinerlei Wirksamkeit bezüglich der Verbesserung des Flammschutzes auf.

### Oberflächenaushärtung

Die Beispielschäume werden, wie oben beschrieben, in einer Holzbox hergestellt. Der entstehende Schaum weist nach oben eine Kuppe auf, die direkt nach der Herstellung klebrig ist. Nach einer bestimmten Zeit trocknet diese ab. Dieser Vorgang ist auch als Oberflächenaushärtung beschrieben.

Zur Bestimmung dieser Zeit wird die Schaumkuppe im Abstand von 15 Min. mit einem Kohlepapier belegt, welches mit einem 100-g-Gewicht beschwert wird, um mit einem konstanten Anpreßdruck zu arbeiten. Bei noch nicht ausgehärteter Oberfläche klebt der Kohlenstaub am Schaum fest, und ein Abdruck ist an der Oberfläche des Schaumes erkennbar. Nach dem Trocknen klebt der Kohlenstaub nicht mehr fest, auf dem Schaum ist kein Abdruck zu erkennen. Der Zeitpunkt, ab dem das erste Mal kein Abdruck zu erkennen ist, wird als Aushärtezeit bezeichnet.

Tabelle 5 faßt die Aushärtezeiten bei 25 °C zusammen.

**Tabelle 5:**

| Beispiel Nr. | erfindungsgemäß | Zinkricinoleat [Teile] | Aushärtezeit [min] |
|---|---|---|---|
| 1 | nein | 0 | 240 |
| 2 | ja | 0,1 | 225 |
| 3 | ja | 0,5 | 180 |
| 4 | ja | 1,0 | 120 |
| 20 | nein | 1,0 Zinkstearat | 225 |
| 21 | nein | 1,0 Zinkoleat | 240 |

Die Aushärtezeiten der Schaumoberflächen lassen sich durch Zusatz von Zinkricinoleat signifikant verkürzen. Das bedeutet einen erheblichen Produktionsvorteil, weil sich Aushärtezeiten verkürzen lassen.

Die nicht erfindungsgemäßen Zinksalze der übrigen Carbonsäuren weisen keinerlei Wirksamkeit bezüglich der Beschleunigung der Oberflächenaushärtung auf.

### Geruch der Schäume

Die hergestellten Polyurethanschäume werden nach der Aushärtung der Oberfläche in geruchsneutrale Polyethylenbeutel verpackt. Während der Lagerung von 12 h bei 25 °C findet ein Gasaustausch zwischen Luft im PE-Beutel und dem Gasgemisch in den offenen Schaumporen statt. Nach Öffnen der PE-Beutel wird der Geruch des ausströmenden Gasgemisches von fünf Testpersonen auf einer Skala von 1 bis 6 beurteilt. 1 charakterisiert dabei einen geruchsarmen, 6 einen intensiv riechenden Schaum.

Nach der Prüfung des Gases werden die Schäume aufgeschnitten und der Geruch an den frischen Schnittflächen in der gleichen Weise beurteilt. Tabelle 6 beschreibt die Bewertung der Schäume. Angegeben ist jeweils der Mittelwert, des Urteils der fünf Testpersonen, wobei die Zahlen in Klammern die Extremwerte bedeuten.

**Tabelle 6:**

| Beispiel Nr. | erfindungsgemäß | Zinkricinoleat [Teile] | Geruch des Gasgemisches | Geruch der Schnittflächen |
|---|---|---|---|---|
| 1 | nein | 0 | 4,6 (3/6) | 4,8 (4/6) |
| 2 | ja | 0,1 | 4,4 (2/6) | 4,2 (2/6) |
| 3 | ja | 0,5 | 3,4 (2/5) | 3,6 (3/5) |
| 4 | ja | 1,0 | 2,2 (1/3) | 2,4 (1/3) |
| 20 | nein | 1,0 Zinkstearat | 4,2 (2/6) | 4,8 (4/6) |
| 21 | nein | 1,0 Zinkoleat | 4,6 (3/6) | 4,4 (2/6) |

Auch wenn man bedenkt, daß die Streuungen derartiger Geruchspanels üblicherweise recht groß sind, sind diese Werte als signifikante Aussage in folgender Weise zu werten.

Das subjektive Geruchsempfinden der beurteilten Schäume nimmt mit dem Einsatz von Zinkricinoleat ab. Das deckt sich mit der schon nachgewiesenen absorptiven Wirkung (siehe auch 2-Ethylhexansäure-Emission). Diese Möglichkeit, den Geruch von Polyurethanschäumen zu beeinflussen, ist ein großer technischer Vorteil, insbesondere wenn es um die Produktion von PUR-Schäumen für Matratzen, Sitzmöbel und das Automobil handelt.

Die nicht erfindungsgemäßen Zinksalze der übrigen Carbonsäuren weisen keine signifikante Wirksamkeit bezüglich der Verbesserung des Geruches von Schaumstoffen auf.

## Patentansprüche

1. Verwendung von Metallsalzen der Ricinolsäure zur Verringerung von Emissionen aus Polyurethanschäumen.

2. Verwendung von Metallsalzen der Ricinolsäure gemäß Anspruch 1, **dadurch gekennzeichnet, daß** sie in Form nichtwäßriger Lösungen vor oder während der Herstellung der Polyurethanschäume zugesetzt werden.

## Claims

1. The use of metal salts of ricinoleic acid for reducing emissions from polyurethane foams.

2. The use of metal salts of ricinoleic acid according to Claim 1, **characterized in that** they are added in the form of non-aqueous solustions prior to or during the production of the polyurethane foams.

## Revendications

1. Utilisation de sels métalliques de l'acide ricinoléique pour la diminution d'émissions de mousses de polyuréthane.

2. Utilisation de sels métalliques de l'acide ricinoléique selon la revendication 1, **caractérisée en ce qu'**ils sont ajoutés sous forme de solutions non aqueuses avant ou pendant la préparation de la mousse de polyuréthane.
